Europäisches Patentamt

**European Patent Office**

Office européen des brevets

(11) Publication number: **0 007 223**
A1

# EUROPEAN PATENT APPLICATION

(21) Application number: **79301344.2**

(22) Date of filing: **10.07.79**

(51) Int. Cl.³: **F 16 C 21/00**
**F 16 D 3/41**

(30) Priority: **13.07.78 JP 84563/78**
**12.10.78 JP 124611/78**
**13.10.78 JP 125062/78**

(43) Date of publication of application:
**23.01.80 Bulletin 80/2**

(84) Designated Contracting States:
**DE FR GB IT**

(71) Applicant: **THE TORRINGTON COMPANY**
**59 Field Street**
**Torrington Connecticut 06790(US)**

(72) Inventor: **Ishikawa, Tatsuo**
**of 4-16, Ohgi-Cho, 2-Chome**
**Odawara-shi, Kanagawa-ken(JP)**

(74) Representative: **Couch, Bernhard Charles et al,**
**W.P. THOMPSON & CO. Coopers Building, Church Street**
**Liverpool L1 3AB(GB)**

(54) **Improvements in or relating to roller bearings.**

(57) For use more particularly in universal joints, the invention provides a closed end roller bearing (3) of which the cylindrical race wall (43) is closed at one axial end by a centrally recessed end wall (41) provided with a plurality of circularly distributed, upstanding convex projections (46) which are of circular or elliptical shape in plan view, with their major axes (where present) directed radially of the end wall (41). A trunnion (2) of the universal joint (1) is supported by the bearing (3) in a yoke (7) and lubricant stored both in the central recess (42) of the end wall (41) and in a circumferentially directed groove (44) between the end wall (41) and the cylindrical wall (43) is distributed by convex projections (46) between the end wall and the end face of the trunnion as a result of relative rotary oscillatory movement between the two.

Fig_1

EP 0 007 223 A1

Croydon Printing Company Ltd.

## DESCRIPTION
## "IMPROVEMENTS IN OR RELATING TO ROLLER BEARINGS".

This invention concerns roller bearings and relates more particularly to such bearings including an outer race having one of its axial ends closed. For convenience, bearings including an outer race member having this characteristic will hereinafter be referred to as closed end bearings.

An important example of the use of closed end bearings is in universal joints, wherein the sliding contact surfaces between a trunnion end face of the joint and the closed end wall of the outer race member of the co-operating bearing require good lubrication because of the occasional thrust or pressure contact between them. Generally, the end face of the trunnion and the end wall surface of the outer race of the bearing effect oscillatory sliding rotation (hereinafter simply referred to as oscillatory rotation) while making pressure contact therebetween so that the formation of a lubricant film between the two surfaces is difficult. This leads to a problem in that friction and heat are created due to insufficient lubrication. In practice, the aforementioned contact surfaces have suffered from greater problems than might be apparent because they do not effect a surface contact but in most cases they effect localized contact, sometimes referred to as "edging", due to the inclination of the trunnion and the yoke of the universal joint.

As one way of meeting such problems, it has already been proposed, for example, to provide an oil groove in one or both of the mutually contacting surfaces, but the simple provision of such an oil groove as a lubricant reservoir cannot result in a sufficient lubricating performance and is not wholly effective in practice. It has also been proposed to provide one of the contacting members with circumferentially directed, convex ridge means but the relatively large surface contact area or areas presented by such ridge means appear to hinder the satisfactory introduction of oil between the contacting members during oscillatory motion.

The present invention accordingly provides a closed end roller bearing including an outer race member comprising a cylindrical wall providing a raceway for the bearing rollers, a centrally recessed end wall closing one axial end of said cylindrical wall and a circumferentially directed groove or recess between said cylindrical wall and said end wall, said groove and the recess in said end wall acting as lubricant reservoirs, characterised in that the portion of the end wall between the recess and the circumferentially directed groove is plane or flat and is provided intermediate the radially outer periphery of said recess and the radially inner periphery of said groove with a plurality of axially directed, upstanding convex portions of circular or elliptical or similar configuration, said convex portions being circularly spaced around said plane or flat portion, with the major axes of elliptical convex portions being directed radially of said end wall.

When the bearing provided by the invention is used to support a trunnion of the cruciform member of a universal joint, lubricant stored in the central recess and in the circumferential groove of the end wall is distributed between the latter and the opposing end face of the trunnion as a result of the relative rotary oscillatory movement between the two, the distribution resulting from the interaction between the lubricant and the convex portions. The potential contact surfaces between the end wall and the trunnion end face are thereby maintained effectively lubricated at all times and possible damage due to friction and consequential heating is avoided, contributing to increased bearing life.

Preferably, the axial height of the convex portions lies in the range 0.03 mm to 0.2 mm, which range has been found effective to achieve satisfactory lubricant distribution when considered together with such other factors as lubricant viscosity and surface tension.

Although circular or elliptical configurations are preferred for the convex portions, variations or derivations of these shapes may be employed if desired, for example to modify the distributive effect exerted on a lubricant.

As an alternative to forming the convex portions on the end wall of the outer race member, they may be formed on a separate plate abutting that wall or they may be provided on the end face of the trunnion.

The invention will be described further, by way of example, with reference to the accompanying drawings, in which:-

Figure 1 is an axial section of a part of a universal joint including a bearing embodying the invention;

Figure 2 is a transverse section of the outer race member of the bearing used in Figure 1;

Figure 3 is a section taken on the line A-A of Figure 2;

Figure 4 is a view corresponding to Figure 2 of a second embodiment of the outer race member;

Figure 5 is an axial section similar to that of Figure 1 of another embodiment of the invention;

Figure 6 is a transverse section of the outer race member of the bearing shown in Figure 5;

Figure 7 is a view corresponding to Figure 6 but showing an alternative outer race member;

Figures 8 and 9 are sections similar to that of Figure 3 of alternative convex portions, and

Figure 10 is an elevation similar to that of Figure 1 illustrating the invention embodied in a machined race bearing.

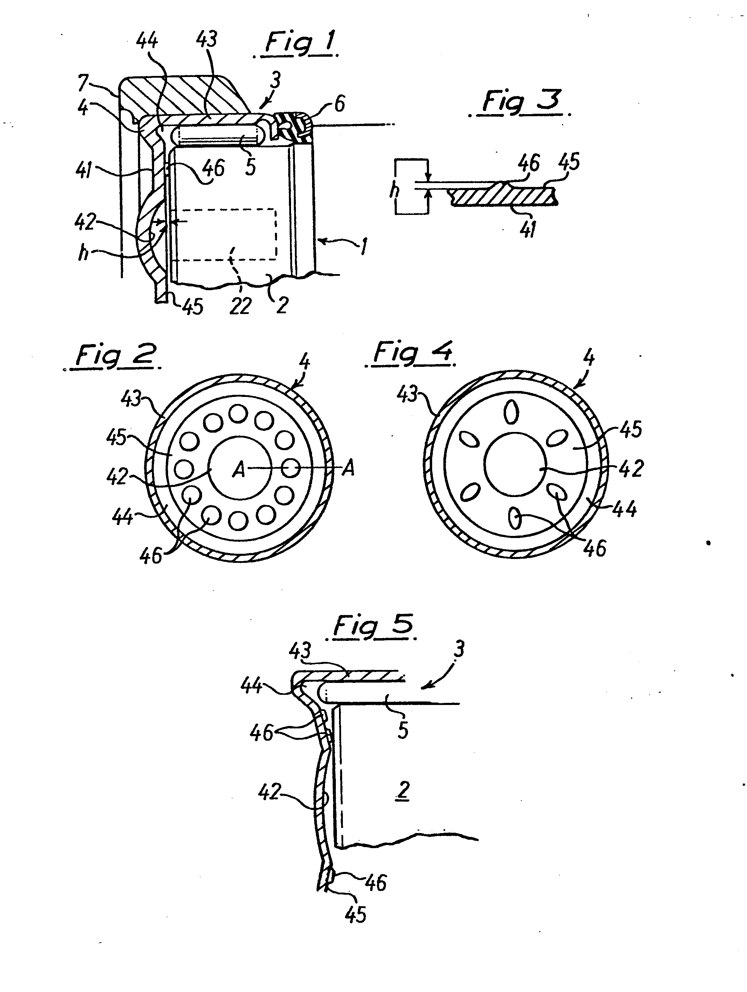

The universal joint shown in Fig.1 includes a centre cruciform member of which one shaft or trunnion 2 is visible in the drawing and is supported in a yoke 7 by a roller bearing 3. The bearing 3 has an outer race 4 formed from thin metal sheet wherein are retained needle rollers 5 engaging the trunnion 2. A seal 6 positioned between the bearing 3 and the cruciform member of the universal joint serves to seal the bearing and the trunnion 2 and to retain lubricant supplied to them during their initial assembly. Conveniently, the free end of the trunnion 2 is formed with an axially directed, blind bore 22 constituting a lubricant reservoir.

As will be seen from Figs. 1 and 2, one axial end of the outer race 4 is closed by a bottom or end wall 41 having a central recess 42. The end wall 41 is circumscribed by a cylindrical side wall 43 and the interconnecting region or corner portion between the end wall 41 and the cylindrical side wall 43 is formed with a circumferentially continuous groove 44 acting as a further lubricant reservoir. The flat portion 45 between the outer peripheral edge of the recess 42 and the inner peripheral edge of the circumferential groove 44 (the circular land left between the two) is formed as a surface substantially perpendicular to the axis, and on the substantially central region thereof, there is formed a plurality of (in the present embodiment, twelve) pressed convex portions 46 which are equally circularly spaced as shown in Figure 2. As will be noted more particularly from Figure 3, the shape of the convex portions 46 when viewed in vertical or axial section is such as to impart a gentle curvature to their top surfaces.

The convex portions 46 of the end wall 41 should advantageously be of as small a diameter as possible consistent with the ability to accept the expected range of thrust loads and, by virtue of the oscillatory motion of the outer race member, to urge lubricant between the bearing and the trunnion contact surfaces.  However, the diameter of the convex portions 46 should not in general be much greater than the amplitude of the oscillations concerned on the circular circumference on which the convex portions are arrayed (the amount of circumferential movement when the joint effects circumferential oscillating movement within the range of oscillation angle thereof) and if possible, should desirably be equal to or slightly smaller than that. However, in the embodiment actually shown in Fig.2, the diameter of the circular convex portions 46 is in fact slightly greater than the anticipated amplitude of oscillation both to facilitate formation of the convex portions 46 and to ensure that they are capable of accepting the expected thrust loads.  The heights $\underline{h}$ (Figure 3) of the convex portions 46 are substantially equal to each other and lie within the range of 0.03 mm to 0.2 mm, dependent upon such parameters as the expected viscosity and surface tension of the lubricant to be used in the bearing.

Too great a height $\underline{h}$ of the convex portions 46 would result in inferior performance in lubricant distribution and would hinder any machining that may be required during their formation and conversely, too small a height below the aforementioned minimum value would lead to the problem that when the trunnion 2 becomes inclined, the rim of the trunnion end face tends to bear against those areas of the flat portion 45 which have no convex portions 46, with the danger that the convex portions 46 then make no contact at all with the end face of the trunnion.

Figure 4 shows an outer race member 4 which employs elliptical convex portions 46 instead of the circular convex portions shown in Figure 2, with the major axes of the elliptical convex portions being disposed radially. The surface configuration of these latter convex portions is curved just like a portion of a Rugby football.

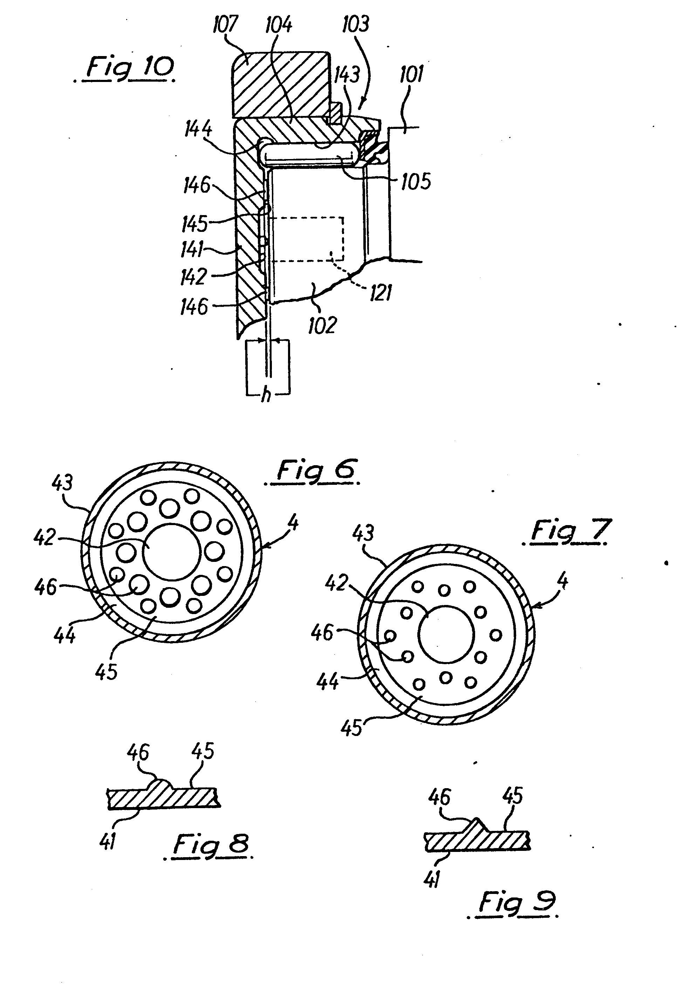

In the universal joint shown in Figures 5 and 6, the flat portion 45 of the bottom or end wall 41 of the bearing race member 4 forms a ramp or axially inwardly inclined surface for positively preventing contact of the trunnion end edge with the flat portion. On top of the flat portion 45, as shown in Figure 6, there are formed two rings of convex portions 46, 46 differing in diameter and these convex portions are arrayed in a circularly staggered relationship such that the convex portions in one ring are disposed between the convex portions in the other ring.

Figure 7 shows an alternative arrangement in which two rings of circular convex portions of the same dimension are arrayed on the flat portion 45 substantially perpendicular to the axis and these convex portions are disposed in a staggered relationship similar to that of Figure 6.

Alternative configurations of the convex portions 46 are shown in Figures 8 and 9, wherein Figure 8 illustrates a convex portion 46 of semi-spherical shape and Figure 9 shows one of conical or pyramidal shape. Other shapes are, of course, possible, within the conditions and parameters already described.

In each of the above-described embodiments, the convex portions are formed by special press working and therefore, the reverse side of the convex portions is formed as a flat surface but depending on the press working employed, said reverse side may be formed with complementary concavities.

Also, in the illustrated embodiments so far described, reference has been made only to bearings having a shell-type or pressed or drawn outer race, but the present invention is of course equally applicable in all its aspects to a closed end solid type roller bearing

having an outer race formed as by machining from a solid body. Such a bearing 103 is shown in Figure 10 incorporated in a universal joint 101 having a trunnion 102 supported in needle rollers 105 retained in a solid outer race 104 of the bearing. The outer race 104 is formed by machining from a solid body or by hot or cold forging operations. The outer race 104 is received in a yoke 107 of the universal joint and the trunnion is formed with an axial blind bore 121 acting as a lubricant reservoir. A closed end wall 141 of the outer race 104 has a recess 142 centrally thereof acting as a lubricant reservoir, and a cylindrical side wall 143 contiguous thereto, and the interconnecting or corner portion between the end wall 141 and the cylindrical side wall 143 is formed with a circumferentially continuous groove 144 constituting a second lubricant. On the substantially central circumference of the flat portion 145 between the outer peripheral edge of the recess 142 and the inner peripheral edge of the circumferential groove 144 (the circular land left between the two,) are formed a plurality of upstanding convex portions 146 formed as by a press operation, the number, size and shapes of the convex portions 146 being determined similarly to the convex portions 46 already described.

## CLAIMS.

1. A closed end roller bearing including an outer race member comprising a cylindrical wall providing a raceway for the bearing rollers, a centrally recessed end wall closing one axial end of said cylindrical wall and a circumferentially directed groove or recess between said cylindrical wall and said end wall, said groove and the recess in said end wall acting as lubricant reservoirs, characterised in that the portion (45 or 145) of the end wall (41 or 141) between the recess (42 or 144) is plane or flat and is provided intermediate the radially outer periphery of said recess and the radially inner periphery of said groove with a plurality of axially directed, upstanding convex portions (46 or 146) of circular or elliptical or similar configuration, said convex portions being circularly spaced around said plane or flat portion (45 or 145), with the major axes of elliptical convex portions being directed radially of said end wall.

2. A roller bearing as claimed in claim 1, in which the convex portions(46 or 146) all lie in a single common circular row situated intermediate said radially inner and outer peripheries.

3. A roller bearing as claimed in claim 2, in which said circular row is sited on the mean radius of said plane or flat portion (45 or 145).

4. A roller bearing as claimed in claim 1, in which the convex portions (46 or 146) lie in a plurality of circular rows of differing diameter situated intermediate said radially inner and outer peripheries, with the convex portions in each row being circularly staggered relative to those in the other rows.

5. A roller bearing as claimed in any one of claims 1 to 4, in which at least the top surfaces of the convex portions (46 or 146) are given a gentle curvature.

6. A roller bearing as claimed in any one of claims 1 to 4, in which at least the top surfaces of the convex portions (46 or 146) are of conical configuration.

7. A roller bearing as claimed in claim 5, in which the convex portions (46 or 146) are semi-spherical in shape.

8. A roller bearing as claimed in any one of the preceding claims, in which the convex portions (46 or 146) have an axial height lying in the range 0.03 mm to 0.2 mm.

9. A roller bearing as claimed in any one of the preceding claims, in which the plane or flat portion (45 or 145) is axially inwardly inclined from the radially inner periphery of the groove (44 or 144) to the radially outer periphery of the recess (42 or 142).

10. A roller bearing as claimed in any one of the preceding claims, in which the rollers (5 or 105) are needle rollers.

11. A roller bearing as claimed in any one of the preceding claims, in which the outer race member (4) is a pressed sheet metal or shell-type race.

12. A roller bearing as claimed in any one of claims 1 to 10, in which the outer race member (104) is a solid race machined or hot-or-cold-forged from a solid body.

13. A universal joint incorporating roller bearings as claimed in any one of the preceding claims, characterised in that each trunnion (2 or 102) of the cruciform member of the joint is supported by one of said bearings and that lubricant in the recess (42 or 142) and groove (44 or 144) is distributed by the convex portions (46 or 146) between the end wall (41 or 141) of the outer race member and the adjacent end face of the trunnion responsive to relative rotary oscillation between said race member and said trunnion.

14. A roller bearing comprising: an outer race having a closed end for supporting a universal joint, said outer race also having a continuous circumferential groove adjacent the outside periphery of the closed end, the closed end having a recess centrally thereof, a cylindrical side wall contiguous to the closed end, and a plurality of separated projections on the flat portion between said recess and said circumferential groove, each projection having a radial length at least as great as its circumferential length.

15. Universal joints and roller bearings therefor, constructed, arranged and adapted to operate substantially as hereinbefore described with reference to and as illustrated in the accompanying drawings.

0007223

1/2.

Fig 1

Fig 3

Fig 2

Fig 4

Fig 5

_Fig 10_

_Fig 6_

_Fig 7_

_Fig 8_

_Fig 9_

0007223

European Patent Office

**EUROPEAN SEARCH REPORT**

Application number

EP 79 30 1344

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| | DE - B - 2 555 667 (GELENKWELLEN-BAU) <br> * Column 4, lines 8-9; figures 6,8 * <br><br> -- <br><br> DE - A - 2 616 020 (SCHAEFFLER) <br> * Page 7, 6th paragraph; figures 4,5 * <br><br> -- | 1,2,4, 13 <br><br><br><br> 1 | F 16 C 21/00 <br> F 16 D 3/41 |
| P | US - A - 4 154 065 (DIFFENDERFER) <br> * Column 1, lines 24-26; column 2, lines 5-24; column 4, lines 50-62; claims; figure 4d * <br><br> -- | 1,2,4, 5,9, 10,13 | **TECHNICAL FIELDS SEARCHED (Int.Cl.³)** <br><br> F 16 C <br> F 16 D |
| A | US - A - 2 802 351 (ANDERSON) | | |
| A | GB - A - 1 170 214 (DANA) | | |
| A | FR - A - 1 161 136 (SCHAEFFLER) | | |
| A | FR - A - 2 033 202 (GELENKWELLEN-BAU) | | |
| A | FR - A - 2 221 640 (TORRINGTON) <br><br> ---- | | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The hague | 24-09-1979 | ORTHLIEB |

EPO Form 1503.1  06.78